# EUROPÄISCHE PATENTANMELDUNG

(11) **EP 3 944 210 A1**
(43) Veröffentlichungstag der Anmeldung: **26.01.2022**
(21) Anmeldenummer: 21181815.8
(22) Anmeldetag: 25.06.2021
(51) Int. Cl.: G08G 1/00

(54) **VERFAHREN ZUM ZUSAMMENSTELLEN EINES FAHRZEUGVERBANDS AUS MEHREREN FAHRZEUGEN, SOWIE COMPUTERPROGRAMMPRODUKT UND ELEKTRONISCHES VERWALTUNGSSYSTEM**

(30) Priorität: 24.07.2020 DE 102020209404
(71) Anmelder: Volkswagen Aktiengesellschaft, 38440 Wolfsburg (DE)
(72) Erfinder: Schmitz, Phillip, 38102 Braunschweig (DE); Schlicht, Peter, 38442 Wolfsburg (DE); Wansart, Jörg, 38104 Braunschweig (DE)

(57) **Zusammenfassung**

Die Erfindung betrifft ein Verfahren zum Zusammenstellen eines Fahrzeugverbands (1) aus mehreren Fahrzeugen (2) für eine durchzuführende Fortbewegungsfahrt des Fahrzeugverbands (1), wobei
- die Zusammenstellung des Fahrzeugverbands (1) mit einem elektronischen Verwaltungssystem (10) durchgeführt wird, wobei
- in Abhängigkeit von einer Route (3) und/oder einen Zielort (11) und/oder einem Ziel-Zeitpunkt eine Zusammenstellungsinformation für das Zusammenstellen des Fahrzeugverbands (1) mit einer Auswerteeinheit (12) des elektronischen Verwaltungssystems (10) erzeugt wird,
- mit der Zusammenstellungsinformation ein elektronisches Anforderungsprofil für die Fahrzeuge (2) des Fahrzeugverbands (1) durch die Auswerteeinheit (12) generiert wird,
- in Abhängigkeit von dem elektronischen Anforderungsprofil potentielle Fahrzeuge (13), welche dem elektronischen Anforderungsprofil entsprechen, für das Zusammenstellen des Fahrzeugverbands (1) durch das elektronische Verwaltungssystems (10) ausgewählt werden. Des Weiteren betrifft die Erfindung ein Computerprogrammprodukt und ein elektronisches Verwaltungssystem (10).

## Beschreibung

Die Erfindung betrifft ein Verfahren zum Zusammenstellen eines Fahrzeugverbands aus mehreren Fahrzeugen für eine durchzuführende Fortbewegungsfahrt des Fahrzeugverbands, wobei die Zusammenstellung des Fahrzeugverbands mit einem elektronischen Verwaltungssystem durchgeführt wird.

Des Weiteren betrifft die Erfindung ein elektronisches Verwaltungssystem zum Zusammenstellen eines Fahrzeugverbands aus mehreren Fahrzeugen für eine durchzuführende Fortbewegungsfahrt des Fahrzeugverbands. Des Weiteren betrifft die Erfindung ein Computerprogrammprodukt.

Autonom fahrende Fahrzeuge mit einem Autonomielevel 3 oder höher stellen aufgrund ihrer hohen Komplexität und Varianz im Straßenverkehr große Anforderungen an ihre Hardware- und Sensorik-Ausstattungen. Die notwendigen Entwicklungs- und Absicherungsarbeiten schlagen sich perspektivisch in hohen Kosten nieder, sodass sich erst langfristig eine hohe Durchdringung des Straßenverkehrs durch autonom fahrende Fahrzeuge sowie ihre automatischen Fahrfunktionen erreichen lassen werden. Automatisches Fahren mit einem Autonomielevel 3 oder höher eröffnet die Möglichkeit, Personen- und Warentransporte mit denselben Fahrzeugen oder mit modifizierten modulartigen Fahrzeugen zu nutzen. Die Komplexität dieser sehr unterschiedlichen Anforderungen erhöht die Fahrzeugkosten, ohne dass der volle Umfang der Ausstattung jeweils erforderlich ist. Außerdem steigt die Anzahl an batteriebetriebene beziehungsweise elektrisch angetriebene Fahrzeuge. Für größere Reichweiten der Fahrzeuge steigt das Gewicht der Fahrzeuge durch Batterien.

Darüber hinaus erhöht dies deutlich die Anforderung an elektrische Infrastrukturen und vorgelagerte Stromnetze im Straßenverkehr. Dies stellt insbesondere bestehende Infrastrukturen in Städten aber auch Energietransportsysteme mit Hochvolttrassen von Erzeugungsorten regenerativer Energie mit Windkraft an den Küsten, dezentralisierte Kraftwärmekopplungen mit Blockheizkraftwerken, Wasserkraftwerken oder Photovoltaikanlagen vor große Herausforderungen. Gegenüber Stromtrassen lassen sich sehr große Energiemengen über ein landesweites sehr gut ausgebautes Gasnetz transportieren. Navigationssysteme zur individuellen Routenoptimierung verschlechtern häufig den Verkehrsfluss, da ein gruppendienliches Verhalten weder systemseitig eingesteuert noch individuell inszeniert werden kann. Manuelle Selbstoptimierung wie andauerndes Linksfahren und unangepasst zu langsame oder zu schnelle Überholvorgänge behindern den Verkehrsfluss. Die Leistungsfähigkeit des Straßensystems wird nicht ausgeschöpft. Ein Fahrerlebnis von Fahrzeuglenkern wird für den überwiegenden Teil der Verkehrsteilnehmer schlechter und für einzelne etwas besser. Jedoch wird für keinen das maximale Ergebnis erreicht bezüglich Fahrzeit, Sicherheit oder Energieverbrauch.

Zur Sicherung des steigenden Waren- und Personentransportbedarfs im Sinne der Daseinsversorgung und Standortsicherung entsteht ein erhöhter Bedarf für den Infrastrukturausbau. Für die öffentlichen Behörden ist dies mit hohen Investitionen und Folgekosten durch den Betrieb verbunden. Komplexität wird auf einen Teil der Flotte verlagert und die gesamten Hard- und Softwarekosten für die Etablierung leistungsfähiger Systeme und Dienste wird minimiert. Gerade unreife Märkte in Bezug auf Infrastrukturen und Fahrzeugflotten können früher adressiert und die Transformation zu intelligenter Mobilität beschleunigt werden. Fahrzeuge und Flotte mit höherer Autarkie können unabhängig von langwierigen Infrastrukturmaßnahmen mit langjährigen Genehmigungsvorläufen betrieben werden.

Die DE 10 2010 041 454 A1 bezieht sich auf ein Verfahren zur Energieübertragung zwischen wenigstens zwei Fahrzeugen. Dabei wird die Energie in Form von elektrischer oder elektromagnetischer Energie direkt oder indirekt zwischen den wenigstens zwei Fahrzeugen während der Bewegung der wenigstens zwei Fahrzeuge übertragen.

Die DE 10 2016 221 064 A1 offenbart ein Verfahren zum Bereitstellen elektrischer Energie an ein erstes Fahrzeug, insbesondere an ein Elektrofahrzeug zur Nutzung als Antriebsenergie, während einer Fahrt des ersten Fahrzeugs, wobei die elektrische Energie durch wenigstens ein weiteres Fahrzeug bereitgestellt wird.

Die US 2018/0039285 A1 offenbart ein Verfahren und ein System zum autonomen Transport von Personen und/oder Gütern. Dabei werden spezifische Module autonom von einem Startpunkt zu einem Zielort bewegt. Dabei können die einzelnen Module entweder für den Personentransport oder für einen Warentransport verwendet werden.

Die DE 10 2018 206 526 A1 offenbart ein Verfahren zum Planen einer automatisierten Fahrzeug-Kolonne.

Beispielsweise werden bereits für unterschiedliche Einsatzzwecke von Fahrzeugen passende Fahrzeuge entwickelt. Beispielsweise werden spezielle Elektrofahrzeuge mit geringer Reichweite für urbane Gebiete entwickelt. Alternativ werden hoch ausgestattete Elektrofahrzeuge eingesetzt, die auch die Langstrecken bewältigen können.

Insbesondere wird der individuelle Besitz eines Fahrzeugs zunehmend unattraktiver. Eine Durchgängigkeit des Reiseerlebnisses von einem kleinen Stadtauto in der City zum Zweckentfremden für Langstrecken bis zum individuellen Zielort ist nur mit höher ausgestatten Fahrzeugen möglich. Die begrenzten Ressourcen wie seltene Erden können nicht optimal eingesetzt werden, insbesondere bei hohen Rückstellungen für Batterieentsorgung beziehungsweise -recycling.

Beispielsweise gibt es schon Ansätze zur Nutzung eines Autozuges mit dem eigenen Fahrzeug oder von multimodalen Reiseketten ohne eigenes Fahrzeug. Beispielsweise gibt es hierfür Carsharing.

Somit besteht die Aufgabe der vorliegenden Erfindung darin, eine effizientere Mobilitätslösung für ein gemeinsames Befahren einer Route von mehreren Fahrzeugen zu schaffen.

Diese Aufgabe wird durch ein Verfahren, ein Computerprogrammprodukt und ein elektronisches Verwaltungssystem gemäß den unabhängigen Patentansprüchen gelöst. Sinnvolle Weiterbildungen ergeben sich aus den Unteransprüchen.

Ein Aspekt der Erfindung betrifft ein Verfahren zum Zusammenstellen eines Fahrzeugverbands aus mehreren Fahrzeugen für eine durchzuführende Fortbewegungsfahrt des Fahrzeugverbands, wobei die Zusammenstellung des Fahrzeugverbands mit einem elektronischen Verwaltungssystem durchgeführt wird. In Abhängigkeit von einer Route und/oder einem Zielort und/oder einem Ziel-Zeitpunkt wird eine Zusammenstellungsinformation für das Zusammenstellen des Fahrzeugverbands mit einer Auswerteeinheit des elektronischen Verwaltungssystems erzeugt. Mit der Zusammenstellungsinformation wird ein elektronisches Anforderungsprofil für die Fahrzeuge des Fahrzeugverbands durch die Auswerteeinheit generiert. In Abhängigkeit von dem elektronischen Anforderungsprofil werden potentielle Fahrzeuge für die vorgegebene Route, welche dem elektronischen Anforderungsprofil entsprechen, für das Zusammenstellen des Fahrzeugverbands durch das elektronische Verwaltungssystems ausgewählt.

Durch das vorgeschlagene Verfahren kann ein Fahrzeugverband auf intelligente Weise zusammengestellt und betrieben werden. Insbesondere kann bei der Zusammenstellung des Fahrzeugverbands auf die verschiedensten Anforderungen und/oder Kriterien Rücksicht genommen werden. Somit kann der Fahrzeugverband situationsabhängig und insbesondere an die Bedürfnisse der Fahrzeuge des Fahrzeugverbands angepasst werden. Insbesondere kann bei der Zusammenstellung des Fahrzeugverbands dynamisch auf Änderungen eingegangen und diese bei der Zusammenstellung automatisch berücksichtigt werden. Somit kann erreicht werden, dass eine möglichst energiesparende und kostenreduzierte Fortbewegungsfahrt des Fahrzeugverbands entlang der Route ermöglicht werden kann. Somit kann eine intelligentere Mobilität zum Transport von Personen oder Gütern bereitgestellt werden. Insbesondere dient das Verfahren als eine Alternative für eine zukünftige Mobilität im Straßenverkehr. Somit kann insbesondere der Fahrzeugverband dahingehend dynamisch zusammengestellt werden, dass dieser die Fahrt bzw. Fortbewegung entlang der vorgegebenen Route möglichst effizient durchführen kann, sodass Verzögerungen und Energieressourcen reduziert beziehungsweise minimiert werden können. Insbesondere kann der Fahrzeugverband individuell an bestimmte Anforderungen angepasst werden. Somit ergibt sich für die Fahrzeuge des Fahrzeugverbands ein effizienter Betrieb entlang der vorgegebenen Route. Beispielsweise kann der Fahrzeugverband derart zusammengestellt werden, dass eine möglichst große Reichweite ermöglicht werden kann.

Insbesondere kann mit Hilfe des vorgeschlagenen Verfahrens der Fahrzeugverband für eine effiziente Fernreise beziehungsweise Durchführung einer Langstreckenfahrt zusammengestellt werden. Insbesondere wird der Fahrzeugverband derart zusammengestellt, dass die Anforderungen des elektronischen Anforderungsprofils bestmöglich erfüllt werden. Somit kann der Fahrzeugverband effizient zusammengestellt und eine effiziente Fortbewegung zu einem vorgegebenen Zielort durchführen.

Insbesondere wird die gemeinsame Fortbewegung der Fahrzeuge dadurch den Fahrzeugverband kostenminimierter und ressourcenschonender durchgeführt.

Insbesondere handelt es sich bei dem Fahrzeugverband um eine Fahrzeugkolonne oder um Fahrzeuge, welche zum Durchführen einer gemeinsamen Fortbewegungsfahrt zusammenformiert werden. Insbesondere besteht der Fahrzeugverband aus zumindest zwei Fahrzeugen, insbesondere aus fünf oder beispielsweise aus zehn Fahrzeugen.

Mit Hilfe des Fahrzeugverbands werden insbesondere Langstreckenfahrten auf Autobahnen oder Fernstraßen oder Highways durchgeführt. Ebenso kann der Fahrzeugverband auch in urbanen Gebieten eingesetzt werden. Insbesondere kann der Fahrzeugverband dazu verwendet werden, gleichzeitig einen Personentransport und einen Warentransport durchzuführen. Somit können neben den Personen auch Güter energiesparend zum Zielort mit Hilfe des Fahrzeugverbands transportiert werden. Dabei kann beispielsweise mit Hilfe des elektronischen Verwaltungssystems der Fahrzeugverband derart zusammengestellt werden, dass neben Personentransportaufträgen auch Logistikaufträge berücksichtigt werden. Durch die Kombination von einem Personentransport und einem Warentransport kann eine verbesserte Energieeinsparung und insbesondere somit ein geringerer Emissionsausstoß erreicht werden.

Beispielsweise können anlassbezogene Plattformen, sowie zu buchbare Ausstattungen beziehungsweise Dienste eingesetzt werden, um mit einem gering ausgestatteten, günstigeren Alltagsfahrzeug (individueller Besitz oder Sharing-Angebot) höherwertige Dienste oder anspruchsvolle Fahrten abzudecken. Somit kann eine verbesserte Mobilität im Straßenverkehr erreicht werden. Beispielsweise kann es sich bei dem Fahrzeugverband in anderen Orten um ein Transportsystem mit anders bezogener Motorisierung und Ausstattung handeln.

Bei dem elektronischen Verwaltungssystem kann es sich beispielsweise um eine Steuerungsplattform handeln, mit welcher die verschiedensten unterschiedlichen Fahrzeugtypen zu einem Fahrzeugverband zusammengestellt werden können. Beispielsweise kann das elektronische Verwaltungssystem als Backend, Cloud, ein verteiltes System, oder als Bestandteile in den Fahrzeugen ausgebildet sein. Mit dem elektronischen Verwaltungssystem können speziell gewisse Orchestrierungen, Vorabberechnungen und Optimierungen des Fahrzeugverbands durchgeführt werden. Diese Orchestrierungen, Vorabberechnungen und Optimierungen des Fahrzeugverbands können den einzelnen Fahrzeugen über Applikationen, Internetrechner oder Mobilitätsteilnehmern bereitgestellt werden.

Beispielsweise kann mit Hilfe des vorgenannten Verfahrens der Fahrzeugverband derart zusammengestellt werden, dass eine verbesserte internationale multimodale Liefer- und Reisekette bereitgestellt werden kann. Mit Hilfe des zusammengestellten Fahrzeugverbands kann eine maximale Effizienz erreicht werden bei gleichzeitig minimalem Ressourcenbeziehungsweise Energieeinsatz. Durch die individuelle Zusammenstellung des Fahrzeugverbands kann eine hohe Reichweite ohne Nachladen und damit ein erhöhter Kundennutzen durch ein nahtloses Reiseerlebnis ermöglicht werden.

Beispielsweise kann bei der Zusammenstellung des Fahrzeugverbands ein Führungsfahrzeug dem Fahrzeugverband zugeordnet werden. Mit Hilfe des Führungsfahrzeugs kann der Fahrzeugverband entlang der Route angeführt werden. Insbesondere können mit Hilfe des Führungsfahrzeugs die mehreren Fahrzeuge des Fahrzeugverbands gesteuert, verwaltet, überwacht oder gelenkt werden. Mit Hilfe des Führungsfahrzeugs kann beispielsweise während der Fortbewegungsfahrt des Fahrzeugverbands den mehreren Fahrzeugen ein eigenes lokales Funknetzwerk bereitgestellt werden, sodass alle Fahrzeuge des Fahrzeugverbands kommunikativ vernetzt sind. Ebenso kann mit Hilfe des Führungsfahrzeugs ein zusätzliches Energiereservoir für die Fahrzeuge des Fahrzeugverbands während der Fortbewegungsfahrt bereitgestellt werden. Somit können die einzelnen Fahrzeuge des Fahrzeugverbands mit Hilfe des Führungsfahrzeugs während der Fortbewegungsfahrt entlang der Route mit Energie versorgt werden. Somit ergibt sich eine erhöhte Reichweite des Fahrzeugverbands ohne einen Zwischenstopp einlegen zu müssen.

In einem Ausführungsbeispiel der Erfindung ist vorgesehen, dass die für das Zusammenstellen des Fahrzeugverbands ausgewählten Fahrzeuge automatisch zu einem Startpunkt bewegt werden, und wobei die ausgewählten Fahrzeuge an dem Startpunkt zu dem Fahrzeugverband hintereinander angeordnet werden, sodass die Fortbewegungsfahrt durch den Fahrzeugverband gemeinsam mit den mehreren Fahrzeugen durchgeführt werden kann. Somit kann der Fahrzeugverband nach der Auswahl der für den Fahrzeugverband potentiellen Fahrzeuge ohne große Zeitverzögerungen erstellt beziehungsweise gegründet werden. Somit kann der Fahrzeugverband die bevorstehende Fortbewegungsfahrt entlang der vorgegebenen Route schnellstmöglich starten. Somit kann ein Zielort ohne zeitliche Verzögerungen erreicht werden. Beispielsweise können die für die Zusammenstellung des Fahrzeugverbands ausgewählten Fahrzeuge über ein entsprechendes Steuersignal autonom zu dem Startpunkt bewegt werden. Dabei können die ausgewählten Fahrzeuge beispielsweise autonom fahrende Fahrzeuge mit einem Autonomielevel 3 oder höher sein. Somit können die Fahrzeuge mit Hilfe von Fahrerassistenzsystemen oder Steuersystemen nach der bestätigten Auswahl für den Fahrzeugverband automatisch zu dem vorgegebenen Startpunkt bewegt werden. Somit kann an dem Startpunkt alle für den Fahrzeugverband ausgewählten potentiellen Fahrzeuge zu dem Fahrzeugverband tatsächlich und physisch zusammengefasst werden.

Beispielsweise können manuell oder autonom gesteuerte Fahrzeuge und/oder Warentransportfahrzeuge (Lastkraftwagen) an dem Startpunkt beziehungsweise Startort der Fortbewegungsfahrt zusammengerufen beziehungsweise geordert werden. Diese Fahrzeuge können dadurch zu dem eigentlichen Fahrzeugverband physisch zusammengefügt werden. Dabei können die ausgewählten Fahrzeuge nacheinander beziehungsweise hintereinander in definierten Abständen zu dem Fahrzeugverband sortiert und gebündelt werden. Beispielsweise können die ausgewählten Fahrzeuge anders ausgestattet sein oder aus einem Fahrzeugpool ausgewählt werden. Insbesondere werden auf dem Weg zu dem Startpunkt die ausgewählten Fahrzeuge mit einander synchronisiert, sodass eine möglichst effiziente Fortbewegungsfahrt des Fahrzeugverbands durchgeführt werden kann. Insbesondere werden die ausgewählten Fahrzeuge über das gemeinsame Reiseziel informiert und entsprechend miteinander vernetzt beziehungsweise gekoppelt. Beispielsweise können an dem Startpunkt die ausgewählten Fahrzeuge und insbesondere die Insassen oder Nutzer der ausgewählten Fahrzeuge Zusatzdienste für beispielsweise eine attraktive Langstrecke angeboten werden. Ebenso können die ausgewählten Fahrzeuge an dem Startpunkt drahtlos oder mechanisch miteinander gekoppelt werden. Insbesondere werden einzelne aus diesen Fahrzeugen derart hintereinander angeordnet, dass sich eine günstige Windschattenverteilung ergibt. Somit kann während der Fortbewegungsfahrt des Fahrzeugverbands Energie eingespart werden.

In einem weiteren Ausführungsbeispiel der Erfindung ist vorgesehen, dass mit dem elektronischen Verwaltungssystem ein die Auswahl betreffendes Hinweissignal generiert und jeweils an die ausgewählten Fahrzeuge übermittelt wird. Insbesondere wird mit Hilfe einer Auswerteeinheit des elektronischen Verwaltungssystems das Hinweissignal generiert. Beispielsweise kann das Hinweissignal über ein Funknetzwerk an die ausgewählten Fahrzeuge übermittelt werden. Somit können nach der durchgeführten Auswahl für die Zusammenstellung des Fahrzeugverbands die ausgewählten Fahrzeuge und insbesondere die Insassen der ausgewählten Fahrzeuge über die mögliche und insbesondere freigegebene Teilnahme an dem Fahrzeugverband informiert werden. Somit kann beispielsweise den ausgewählten Fahrzeugen und insbesondere den Insassen der ausgewählten Fahrzeuge eine entsprechende Entscheidungsgewalt bereitgestellt werden, sodass diese entscheiden können, ob das jeweils ausgewählte Fahrzeug sich tatsächlich dem Fahrzeugverband anschließen soll.

Beispielsweise kann das Hinweissignal entsprechende Anweisungen und/oder Informationen bezüglich des Fahrzeugverbands beinhalten, welche einem Fahrerassistenzsystem zumindest eines ausgewählten Fahrzeugs übermittelt werden. Ebenfalls mit diesen Informationen kann ein Fahrzeuglenker eines der ausgewählten Fahrzeuge akustisch und/oder optisch an eine Ausgabeeinheit des jeweils ausgewählten Fahrzeugs angezeigt werden.
In einem weiteren vorteilhaften Ausführungsbeispiel der Erfindung ist vorgesehen, dass in Abhängigkeit von dem übermittelten Hinweissignal die ausgewählten Fahrzeuge oder Nutzer der ausgewählten Fahrzeuge eine Teilnahme an dem Fahrzeugverband bestätigten oder ablehnen, wobei eine Information über die Bestätigung oder die Ablehnung zumindest eines ausgewählten Fahrzeugs an das elektronische Verwaltungssystem übermittelt wird. Somit kann den ausgewählten Fahrzeugen und insbesondere den Nutzern der ausgewählten Fahrzeuge die Entscheidungsgewalt übertragen werden, ob eine Teilnahme wirklich gewünscht oder unerwünscht ist. Beispielsweise kann die Bestätigung oder die Ablehnung über die Teilnahme durch ein elektronisches Fahrerassistenzsystem der ausgewählten Fahrzeuge automatisch oder von einem Nutzer zumindest eines ausgewählten Fahrzeugs manuell durchgeführt werden. Beispielsweise kann dabei ein Nutzer über eine elektronische Eingabeeinheit (beispielsweise Smartphone, Tablet oder Infotainmentsystem) die Teilnahme bestätigen oder ablehnen. Nachdem die Teilnahme bestätigt oder abgelehnt wurde, kann die Information über die Bestätigung oder die Ablehnung generiert werden und automatisch dem zumindest elektronischen Verwaltungssystem übermittelt werden. Somit erfährt das elektronische Verwaltungssystem frühzeitig, ob eine erneute Suche nach einem potentiellen Fahrzeug durchgeführt werden muss.

In einem Ausführungsbeispiel der Erfindung ist vorgesehen, dass nach der Übermittlung der Information über die Ablehnung des zumindest einen ausgewählten Fahrzeugs eine erneute Auswahl an potentiellen Fahrzeugen für die Zusammenstellung des Fahrzeugverbands durchgeführt wird. somit kann automatisch nach der Übermittlung der Information über die Ablehnung eine Wiederholung der Suche und Auswahl eines potentiellen Fahrzeugs für den Fahrzeugverband durchgeführt werden. Somit kann trotz der Ablehnung des zumindest einen ausgewählten Fahrzeugs ein alternativer Teilnehmer beziehungsweise ein alternatives Fahrzeug gesucht werden, sodass möglichst schnell der Fahrzeugverband vervollständigt beziehungsweise komplett zusammengestellt werden kann.

In einem vorteilhaften Ausführungsbeispiel der Erfindung ist vorgesehen, dass die ausgewählten Fahrzeuge für die Zusammenstellung des Fahrzeugverbands auf einem Streckenabschnitt hintereinander positioniert werden, wobei den ausgewählten Fahrzeugen über ein Funknetzwerk die Soll-Position jedes ausgewählten Fahrzeugs in dem Fahrzeugverband übermittelt wird. Somit kann eine geordnete und reibungslose Zusammenstellung des Fahrzeugverbands erfolgen. Insbesondere kann durch die Bestimmung und Mitteilung der jeweiligen Soll-Position der ausgewählten Fahrzeuge ein geordnetes Zusammenstellen des Fahrzeugverbands durchgeführt werden. Insbesondere wird die Zusammenstellung an dem Startpunkt durchgeführt. Dabei wird an diesem Startpunkt entlang eines Streckenabschnitts die Sortierung beziehungsweise Bildung des Fahrzeugverbands aus den ausgewählten Fahrzeugen durchgeführt. Beispielsweise kann es sich bei dem Streckenabschnitt um einen Parkplatz oder eine Haltebucht handeln. Insbesondere werden bei der Generierung beziehungsweise der Mitteilung der jeweiligen Soll-Positionen spezifische Eigenschaften für den Fahrzeugverband oder die jeweiligen ausgewählten Fahrzeuge berücksichtigt. Beispielsweise kann für die Bestimmung der jeweiligen Soll-Position eine Reihenfolge und/oder eine Priorisierungsliste des Fahrzeugverbands berücksichtigt werden. Insbesondere kann die jeweilige Soll-Position in Abhängigkeit von der Zusammenstellung von Informationen, insbesondere vom elektronischen Anforderungsprofil, generiert werden. Insbesondere werden die ausgewählten Fahrzeuge in Abhängigkeit ihrer Fahrzeuglänge und/oder Fahrzeugbreite hintereinander angeordnet. Somit können die ausgewählten Fahrzeuge derart angeordnet werden, dass der Fahrzeugverband einen möglichst vorteilhaften Windschatteneffekt ausnutzt. Somit kann eine Energieeinsparung des Fahrzeugverbands erreicht werden. Ebenso können die ausgewählten Fahrzeuge in Abhängigkeit ihrer jeweiligen Systemausstattungen (beispielsweise Fahrerassistenzsystem und/oder Sensoreinrichtung) in dem Fahrzeugverband positioniert werden.

Diese Informationen bezüglich der jeweiligen Soll-Position der ausgewählten Fahrzeuge kann beispielsweise über einen Mobilfunkstandard als Funknetzwerk übertragen werden.

In einem vorteilhaften Ausführungsbeispiel der Erfindung ist vorgesehen, dass in Abhängigkeit von dem elektronischen Anforderungsprofil eine Suchanfrage für die potentiellen Fahrzeuge erzeugt und über ein Funknetzwerk ausgesendet wird. Nach der Generierung des elektronischen Anforderungsprofils in Abhängigkeit der Zusammenstellungsinformation kann eine entsprechende Suchanfrage für die potentiellen Fahrzeuge für den Fahrzeugverband mit Hilfe einer Auswerteeinheit des elektronischen Verwaltungssystems erzeugt beziehungsweise generiert werden. Mit Hilfe der Suchanfrage kann eine spezielle und individuelle und an den Fahrzeugverband angepasste Suche für potentielle Fahrzeuge für die Teilnahme an dem Fahrzeugverband erfolgen.

In einem Ausführungsbeispiel der Erfindung ist vorgesehen, dass die ausgesendete Suchanfrage von zumindest einem potentiellen Fahrzeug empfangen und eine Information bezüglich einer Teilnahmeintention des zumindest einen potentiellen Fahrzeugs für eine Teilnahme an dem Fahrzeugverband an das elektronische Verwaltungssystem übermittelt wird, wobei eine Übereinstimmung einer Eigenschaft des zumindest einen potentiellen Fahrzeugs mit dem elektronischen Anforderungsprofils überprüft wird. Dadurch kann das potentielle Fahrzeug, welches die Suchanfrage empfangen hat, eine entsprechende Rückantwort bezüglich einer bevorzugten Teilnahme an dem Fahrzeugverband aussenden. Beispielsweise kann die die zurückgesandte Information bezüglich der Teilnahmeintention bzw. des Teilnahmewunsches über einen eigenen Kommunikationskanal zwischen dem elektronischen Verwaltungssystem und dem zumindest einen potentiellen Fahrzeug erfolgen. Beispielsweise kann hierfür ein offenes Netz bereitgestellt werden. Somit kann ein Austausch von Informationen zwischen dem elektronischen Verwaltungssystem und dem zumindest einen potentiellen Fahrzeug durchgeführt werden. Somit kann erreicht werden, dass stetig nur tatsächliche potentielle Fahrzeuge, welche auch gewillt sind, sich dem Fahrzeugverband anzuschließen, ausgewählt und zum Fahrzeugverband zugeordnet werden. Insbesondere kann durch die zusätzliche Rücksendung der Information bezüglich des Teilnahmewunsches eine zweitstufige Suche von potentiellen Fahrzeugen durchgeführt werden. Als erstes müssen die potentiellen Fahrzeuge dem elektronischen Anforderungsprofil entsprechen und diese ausgewählten Fahrzeuge müssen auch bereit sein, sich dem Fahrzeugverband anzuschließen beziehungsweise unterzuordnen. Beispielsweise kann die Information bezüglich des Teilnahmewunsches des zumindest einen potentiellen Fahrzeugs über das Funknetzwerk dem elektronischen Fahrzeugverband übermittelt werden. Die Information bezüglich des Teilnahmewunschs kann von dem elektronischen Verwaltungssystem empfangen und entsprechend ausgewertet werden. Somit kann insbesondere eine Übereinstimmung des zumindest einen potentiellen Fahrzeugs anhand des elektronischen Anforderungsprofils überprüft werden. Somit kann sichergestellt werden, dass nur die Fahrzeuge dem Fahrzeugverband zugeordnet werden, welche möglichst alle Kriterien für den Fahrzeugverband erfüllen.

In einem vorteilhaften Ausführungsbeispiel der Erfindung ist vorgesehen, dass in Abhängigkeit von der Überprüfung der Übereinstimmung das zumindest eine potentielle Fahrzeug für das Zusammenstellen des Fahrzeugverbands durch das elektronische Verwaltungssystem ausgewählt wird. Somit kann anhand der Überprüfung der Übereinstimmung beziehungsweise der Kompatibilität des zumindest einen potentiellen Fahrzeugs dieses durch das elektronische Verwaltungssystem für die Zusammenstellung des Fahrzeugverbands ausgewählt werden. Somit kann eine detaillierte und umfangreiche Überprüfung der potentiellen Fahrzeuge für die Teilnahme an dem Fahrzeugverband durchgeführt werden. Beispielsweise können bei der Überprüfung der Übereinstimmung spezielle Ausstattungen oder Eigenschaften des zumindest einen potentiellen Fahrzeugs mit dem elektronischen Anforderungsprofil verglichen werden.

In einem Ausführungsbeispiel der Erfindung ist vorgesehen, dass mit dem elektronischen Anforderungsprofil die potentiellen Fahrzeuge dahingehend überprüft werden, ob die potentiellen Fahrzeuge spezifische Fahrerassistenzsysteme und/oder Hardwarekomponenten und/oder Softwaresysteme und/oder Sensorsystem aufweisen. Somit kann erreicht werden, dass der Fahrzeugverband aus einer Vielzahl von unterschiedlichen Fahrzeugen aufgebaut ist, wobei jedes der Fahrzeuge des Fahrzeugverbands spezifische und individuelle Eigenschaften in den Fahrzeugverband einbringt. Somit kann der Fahrzeugverband energiesparender, intelligenter und effizienter zusammengestellt und später auch betrieben werden. Insbesondere können mit Hilfe des elektronischen Anforderungsprofils Fahrzeuge mit einer individualisierbaren Ausstattung ausgewählt werden. Beispielsweise können ebenso bei der Auswahl der potentiellen Fahrzeuge die jeweiligen Antriebsarten und/oder Energiespeicherkapazitäten der Fahrzeuge berücksichtigt werden. Somit können größere Reichweiten durch den Fahrzeugverband befahren werden. Beispielsweise kann mit Hilfe des elektronischen Anforderungsprofils eine Hardwarekonfiguration der einzelnen Fahrzeuge vorgegeben werden. Ebenso können die Fahrzeuge anhand ihrer Möglichkeit von Hardewaresetups überprüft werden. Beispielsweise können mit Hilfe des elektronischen Anforderungsprofils die Fahrzeuge dahingehend überprüft werden, ob diese entsprechende Ausstattungen für eine automatisierte Fahrt beziehungsweise eine pilotierte Fahrt aufweisen. Ebenso kann überprüft werden, ob die Fahrzeuge entsprechende Sensorpakete, leistungsstarke Recheneinheiten, Kommunikationseinheiten, Aggregatkonfigurationen oder entsprechende Fahrwerke aufweisen.

Beispielsweise kann ebenso mit dem elektronischen Anforderungsprofil eine Art und/oder ein Umfang des möglichen Fahrzeugverbands definiert werden. Dabei kann darauf geachtet werden, dass spezielle Fahrzeuge Teil des Fahrzeugverbands sind. Dabei wird beispielsweise auch eine Car2Car-Kompatibilität oder ein anderes Konzept oder eine Fahrzeuggröße oder eine Fahrzeuglast oder eine mögliche Fahrzeugzuladung beachtet. Ebenso kann die zur Verfügung stehende Kommunikations- und Sensortechnologie der Teilnehmer des Fahrzeugverbands berücksichtigt werden, um eine stabile Kommunikation und Umfeldwahrnehmung über die gesamte Fahrzeugverbandlänge zu erreichen. Ebenso kann mit dem elektronischen Anforderungsprofil der jeweilige Start oder das Ziel, die Route oder ein Zeitkorridor und/oder ein Umfang der Mobilität berücksichtigt werden. Dabei kann beispielsweise darauf geachtet werden, dass entsprechend der aktuellen Anforderungen eine entsprechende Anzahl an Personen befördernden Transportmitteln und eine entsprechende Anzahl an Waren befördernden Transportmöglichkeiten dem Fahrzeugverband zugehörig sind.

In einem weiteren Ausführungsbeispiel der Erfindung ist vorgesehen, dass der zusammengestellt Fahrzeugverband während der durchgeführten Fortbewegungsfahrt entlang der Route von einem Führungsfahrzeug der mehreren Fahrzeuge angeführt wird. Insbesondere wird das Führungsfahrzeug ebenfalls vor der eigentliche Fortbewegungsfahrt für den Fahrzeugverband entsprechend ausgewählt und dem Fahrzeugverband zugeordnet. Bei dem Führungsfahrzeug kann es sich insbesondere um ein spezielles Fahrzeug, welche spezifische Ausstattungen zum Anführen eines Fahrzeugverbands aufweist, handeln. Insbesondere dient das Führungsfahrzeug zum Anführen des Fahrzeugverbands bei langen Fahrstrecken. Dabei kann das Führungsfahrzeug ein leistungsstarkes Fahrzeug sein. Beispielsweise kann das Führungsfahrzeug ein "Lead"-Vehikel sein. Mit dem Führungsfahrzeug kann beispielsweise der Fahrzeugverband von hinten angeschoben oder von vorne gezogen werden. Beispielsweise kann das Führungsfahrzeug als mobile Energieversorgungseinheit für den Fahrzeugverband dienen. Dadurch kann das Führungsfahrzeug eine Energieversorgung der einzelnen Fahrzeuge des Fahrzeugverbands während der Fortbewegungsfahrt bereitstellen. Dabei können die Fahrzeuge des Fahrzeugverbands mit dem Führungsfahrzeug physikalisch gekoppelt werden, sodass eine Energieübertragung durchgeführt werden kann. Dabei kann zum einen elektrische Energie oder fossile Energie bereitgestellt werden. Ebenso kann das Führungsfahrzeug eine entsprechende Kommunikationstechnik aufweisen, um die Fahrzeuge des Fahrzeugverbands kommunikativ miteinander zu vernetzen. Sozusagen kann mit Hilfe des Führungsfahrzeugs ein Hotspot für die mehreren Fahrzeuge des Fahrzeugverbands bereitgestellt werden. Somit kann eine redundante Datenversorgung der Fahrzeuge des Fahrzeugverbands bereitgestellt werden.

Beispielsweise kann das Führungsfahrzeug als Elektrofahrzeug oder als Brennstoffzellenfahrzeug ausgebildet sein. Eine weitere Möglichkeit ist, dass dem Fahrzeugverband ein Abschlussfahrzeug zur Verfügung gestellt wird, welches am Ende des Fahrzeugverbands angeordnet ist. Beispielsweise können mit diesem speziellen Bremsvorgänge oder mechanische Kopplungen durchgeführt werden.

In einem weiteren Ausführungsbeispiel der Erfindung ist vorgesehen, dass mit dem Führungsfahrzeug ein Steuersignal generiert wird und in Abhängigkeit von dem Steuersignals die weiteren Fahrzeuge des Fahrzeugverbands gesteuert werden. Somit kann mit Hilfe des Führungsfahrzeugs der Fahrzeugverband gesteuert, gelenkt, organisiert und insbesondere vernetzt werden. Das Führungsfahrzeug kann in Abhängigkeit von Umgebungsinformationen und/oder Verkehrssituationen und/oder weiteren Informationen das Steuersignal generieren. Mit Hilfe des Funknetzwerks kann das Steuersignal an die weiteren vom Führungsfahrzeug angeführten Fahrzeuge des Fahrzeugverbands übermittelt werden. Somit kann das Führungsfahrzeug beispielsweise eine Bewegung und/oder eine Trajektorie und/oder eine Steuerung und/oder eine Überwachung der angeführten Fahrzeuge des Fahrzeugverbands durchführen.

Beispielsweise kann mit Hilfe des Führungsfahrzeugs ein Einfädelvorgang, ein Ausfädelvorgang, ein Überholvorgang, eine Energieübertragung, ein Notfallmanöver, ein Fahrmanöver, ein Bremsmanöver, ein Notbremsvorgang, ein Reißverschlussverfahren, ein Beschleunigungsvorgang, oder ein Lenkvorgang der angeführten Fahrzeuge des Fahrzeugverbands gesteuert werden. Insbesondere werden die angeführten Fahrzeuge mit Hilfe des Führungsfahrzeugs derart gesteuert, dass die angeführten Fahrzeuge dem Führungsfahrzeug entlang der Fortbewegungsfahrt des Fahrzeugverbands synchron folgen. Insbesondere erfolgt die Bewegung der angeführten Fahrzeuge des Fahrzeugverbands dynamisch angepasst an eine Bewegung des Führungsfahrzeugs.

In einem Ausführungsbeispiel der Erfindung ist vorgesehen, dass bei der Erzeugung der Zusammenstellungsinformation ein Zustand der Fahrbahn der Route und/oder eine Unfallstatistik der Route und/oder eine Verkehrsinformation der Route und/oder eine Wetterinformation berücksichtigt werden. Somit werden die potentiellen Fahrzeuge durch das elektronische Verwaltungssystem ausgewählt, welche für den bevorstehenden Fahrzeugverband am besten geeignet sind. Insbesondere können mit Hilfe der Zusammenstellungsinformation spezifische Anforderungen und/oder Kriterien für die bevorstehende durchzuführende Fortbewegungsfahrt des Fahrzeugverbands berücksichtigt werden. Somit kann erreicht werden, dass eine effiziente und schnelle Durchführung der vorgegebenen Route durch den Fahrzeugverband durchgeführt werden kann. Beispielsweise können eine Streckenausstattung beziehungsweise eine Streckenauslastung oder einen Sensorik entlang der Route oder eine Netzabdeckung entlang der Route oder eine Risikoabschätzung für die bevorstehende Route bei der Erzeugung der Zusammenstellungsinformation berücksichtigt werden. Somit können die bestmöglichen passenden Fahrzeuge für den Fahrzeugverband für die bevorstehende Fortbewegungsfahrt gesucht und ausgewählt werden. Somit kann eine effiziente Fortbewegungsfahrt des Fahrzeugverbands erreicht werden.

Beispielsweise kann mit der Auswerteeinheit des elektronischen Verwaltungssystems Fahrmanöver des Fahrzeugverbands, Konfigurationen der Fahrzeuge, Steuerungssignale für die Fahrzeuge vorausberechnet und situativ angepasst werden. Beispielsweise können Seitenwindschübe entlang der Route im Vorfeld miteinberechnet werden. Die Rechenlast kann hierbei in Abhängigkeit von der aktuellen und zukünftigen Konnektivität zwischen Fahrzeugverband und elektronischen Verwaltungssystem aufgeteilt werden, um Zeit, Effizienz und Energieverbrauch zu optimieren.

Ein weiterer Aspekt der Erfindung betrifft ein Computerprogrammprodukt, umfassend Befehle, die bei der Ausführung des Programms durch einen Computer diesen veranlassen, ein Verfahren nach einem der vorherigen Aspekte oder eine Weiterbildung davon auszuführen.

Ein weiterer Aspekt der Erfindung betrifft ein elektronisches Verwaltungssystem zum Zusammenstellen eines vorgegebenen Fahrzeugverbands aus mehreren Fahrzeugen für eine durchzuführende Fortbewegungsfahrt des vorgegebenen Fahrzeugverbands entlang einer vorgegebenen Route. Das elektronische Verwaltungssystem weist eine Auswerteeinheit zum Erzeugen einer Zusammenstellungsinformation in Abhängigkeit von der vorgegebenen Route und/oder einem vorgegebenen Zielort und/oder einem vorgegebenen Ziel-Zeitpunkt für das Zusammenstellen des Fahrzeugverbands auf. Eine Auswerteeinheit ist zum Generieren eines elektronischen Anforderungsprofils für die Fahrzeuge des Fahrzeugverbands in Abhängigkeit von der Zusammenstellungsinformation vorgesehene. Eine Verarbeitungseinheit ist vorgesehen, um potentielle Fahrzeugen für die vorgegebene Route in Abhängigkeit von dem elektronischen Anforderungsprofil für das Zusammenstellen des Fahrzeugverbands auszuwählen. Insbesondere wird mit dem elektronischen Verwaltungssystem ein Verfahren nach einem der vorherigen Aspekte oder einer Ausführung davon ausgeführt. Beispielsweise handelt es sich bei dem elektronischen Verwaltungssystem um eine zentrale Steuerungsplattform oder um eine Recheneinheit oder um einen Server oder um eine Datenwolke oder um eine dezentrale Recheneinheit.

Ein zu den obigen kombinierbarer Aspekt betrifft ein Verfahren zum Organisieren des Fahrzeugverbands in mehreren Fahrzeugen, wobei der Fahrzeugverband eine Fortbewegungsfahrt entlang einer Route zu einem Zielort durchführt. Mit zumindest einem Fahrzeug des Fahrzeugverbands wird ein Funknetzwerk erzeugt und ein Organisationssignal in eine Umgebung des Fahrzeugverbands ausgesendet. Mit dem Organisationssignal wird eine Suchanfrage hinsichtlich eines Fahrzeugs für eine potentielle Teilnahme an dem Fahrzeugverband ausgesendet. Das ausgesendete Organisationssignal wird von zumindest einem nicht dem Fahrzeugverband zugehörigen Fahrzeug in der Umgebung des Fahrzeugverbands empfangen, wobei auf Basis von Daten des Organisationssignals oder eines durch das Organisationssignal ausgelösten weiteren Signals überprüft wird ob eine Teilnahme des zumindest einem nicht dem Fahrzeugverband zugehörigen Fahrzeug an dem Fahrzeugverband erfolgt oder möglich ist.

Ein weiterer zu den obigen kombinierbarer Aspekt betrifft ein Verfahren zum Steuern eines Fahrzeugverbands aus mehreren Fahrzeugen mit einem Führungsfahrzeug, wobei der Fahrzeugverband eine Fortbewegungsfahrt entlang einer Route durchführt. Der Fahrzeugverband wird von dem Führungsfahrzeug während der Fortbewegungsfahrt entlang der Route angeführt. Mit einer Kommunikationseinheit des Führungsfahrzeugs wird ein Funknetzwerk für den Fahrzeugverband erzeugt, wobei mit dem Funknetzwerk Netzwerke in mehreren Fahrzeugen des Fahrzeugverbands mit dem Führungsfahrzeug kommunikativ vernetzt werden. Mit dem Funknetzwerk wird ein Steuersignal von dem Führungsfahrzeug an die mehreren Fahrzeuge des Fahrzeugverbands übermittelt, wobei in Abhängigkeit von dem Steuersignal die mehreren Fahrzeuge des Fahrzeugverbands gesteuert werden.

Die jeweiligen Ausführungsbeispiele der einzelnen Aspekte können als vorteilhafte Ausführungsbeispiele mit jeweils anderen Aspekten angesehen werden.

Zu der Erfindung gehören auch Weiterbildungen des erfindungsgemäßen Computerprogrammprodukts und des erfindungsgemäßen elektronischen Verwaltungssystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Computerprogrammprodukts und des erfindungsgemäßen elektronischen Verwaltungssystems hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine beispielhafte Darstellung einer Fortbewegungsfahrt eines Fahrzeugverbands mit mehreren Fahrzeugen;
- Fig. 2: ein beispielhafter Ausschnitt eines Fahrzeugverband aus Fig. 1; und
- Fig. 3: ein Ausführungsbeispiel für ein Zusammenstellen eines Fahrzeugverbands.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

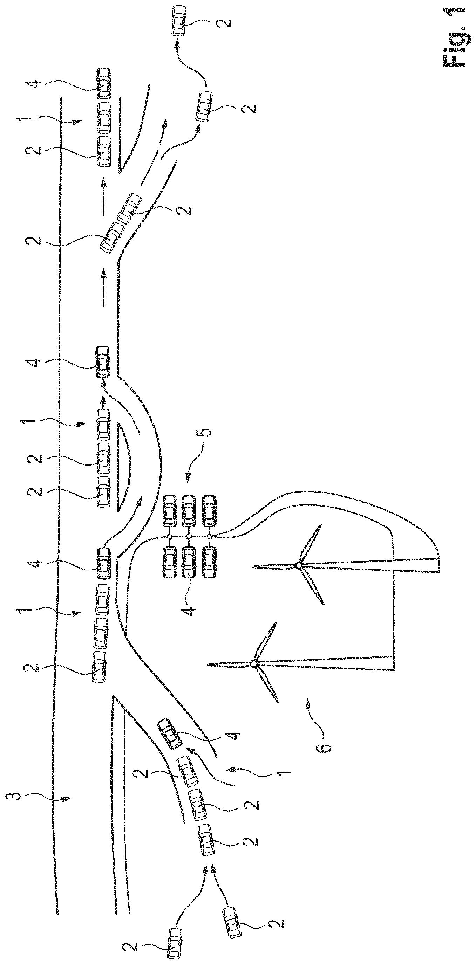

Die Fig. 1 zeigt einen schematischen Ablauf eines Fahrzeugverbands 1. Der Fahrzeugverband 1 besteht aus einer Vielzahl von Fahrzeugen 2. Insbesondere besteht der Fahrzeugverband 1 aus mehreren Fahrzeugen 2, insbesondere aus zumindest zwei Fahrzeugen, speziell aus fünf oder zehn Fahrzeugen 2. Bei den Fahrzeugen 2 kann es sich beispielsweise um Elektrofahrzeuge oder um Verbrennungskraftfahrzeuge oder um Hybridfahrzeuge oder um Plug-In-Fahrzeuge handeln. Insbesondere kann es sich bei dem Fahrzeug 2 um eine Kombination von Lastkraftwägen oder Personenkraftwägen oder Motorräder handeln. Beispielsweise können die Fahrzeuge 2 manuell oder teilautonom oder vollautonom betrieben werden. Insbesondere befindet sich der Fahrzeugverband 1 auf einer Fortbewegungsfahrt entlang einer Route 3. Beispielsweise kann mit dem Fahrzeugverband 1 eine Fortbewegungsfahrt entlang einer Autobahn oder eines Highways oder einer Fernstraße oder in urbanen Gebieten oder in einem Streckenabschnitt geführt werden.

Mit Hilfe des Fahrzeugverbands 1 können insbesondere Kosten minimierende und energiesparende und insbesondere emissionsärmere Fortbewegungsfahrten von mehreren Fahrzeugen 2 erreicht werden. Somit könnten effizientere Mobilitätslösungen für Fahrzeuge 2 bereitgestellt werden.

Wie in der Fig. 1 zu sehen kann beispielsweise auf einer Autobahnauffahrt der Fahrzeugverband 1 auffahren und die Route 3 befahren. Beispielsweise können an speziellen Haltestellen und/oder Abbiegestellen jeweils einzelne Fahrzeuge 2 den Fahrzeugverband 1 verlassen. Dabei kann der Fahrzeugverband 1 die Weiterfahrt durchführen.

Insbesondere kann der Fahrzeugverband 1 als Kombination von Personentransportaufträgen und Gütertransportaufträgen verwendet werden. Somit können Personentransportaufträge und Logistikaufträge miteinander verknüpft werden. Insbesondere kann somit eine dezentrale und selbstorganisierte Transportkette geschaffen werden. Beispielsweise kann somit der Fahrzeugverband über eine B2B-Plattform (entspricht einer Verbindung beispielsweise zu Logistiksystemen und/oder Logistikanbietern) als auch über B2C-Plattformen (entspricht einer Verbindung von Individualreisen) erfolgen.

Beispielsweise kann mit einer Steuerungsplattform, welche speziell als Marktplatz ausgerichtet ist, dezentral und situativ gemeinsame Fahrzeugverbände organisiert werden. Über diese Steuerungsplattform können spezifische Nutzer entsprechende Fahrzeugverbände auswählen. Beispielsweise kann der Nutzer angeben, dass er ein Mobilitätsanforderer ist. Der Mobilitätsanforderer kann von einem Ausgangspunkt zu einem Zielort ohne einen Warenbeziehungsweise Gütertransport befördert werden. Ebenso kann es sich bei dem Nutzer um einen Mobilitätsanbieter handeln, welcher eine Fahrt anbieten möchte. Ebenso kann er Nutzer ein Verbundanbieter sein, welcher anbietet, die Leitung eines Fahrzeugverbands zu übernehmen.

Insbesondere wird der Fahrzeugverband 1 derart zusammengestellt beziehungsweise kommissioniert, dass der Fahrzeugverband 1 stets die resultierende Sicherheit des gesamten Fahrzeugverbands 1 im Blick hat. Dabei werden die einzelnen Fahrzeuge 2 des Fahrzeugverbands 1 anhand ihrer Brems- oder Beschleunigungsfähigkeit überprüft. Insbesondere soll der Fahrzeugverband 1 ein möglichst homogener Fahrzeugverband sein. Insbesondere wird der Fahrzeugverband 1 derart kommissioniert, dass eine maximale Ressourceneinsparung bei optimaler Auslastung der Mobilitätsanbindung und einer maximalen ressourcensparenden Auslegung für die Fahrstrecke gewährleistet werden kann. Insbesondere wird der Fahrzeugverband 1 derart kommissioniert, dass die Optimierung der Fahrzeit und der Auslastung der Verkehrslage Rechnung getragen werden kann.

Beispielsweise kann der Fahrzeugverband 1 während der durchgeführten Fortbewegungsfahrt entlang der Route 3 von einem Führungsfahrzeug 4 angeführt werden. Dabei dient das Führungsfahrzeug 4 beispielsweise zur Steuerung, Lenkung, Kommunikation, Überwachung der mehreren Fahrzeuge 2 des Fahrzeugverbands 1. Insbesondere kann während der Route 3 der Fahrzeugverband 1 von verschiedenen Führungsfahrzeugen 4 angeführt werden. Dabei kann das Führungsfahrzeug 4 an einem entsprechenden Haltepunkt 5 ausgetauscht werden. Insbesondere kann bei diesem Führungsfahrzeug 4 den mehreren Fahrzeugen 2 des Fahrzeugverbands 1 eine mobile Energieversorgung bereitgestellt werden. Insbesondere ist das Führungsfahrzeug 4 derart beschaffen, dass es in der Lage ist, die mehreren Fahrzeuge 2 während der Fortbewegungsfahrt mit Energie zu versorgen. Dabei kann das Führungsfahrzeug 4 sowohl elektrische Energie als auch fossile Energie zur Verfügung stellen. An dem Haltepunkt 5 kann beispielsweise das Führungsfahrzeug 4 gegen ein vollgeladenes beziehungsweise vollgetanktes Führungsfahrzeug 4 ausgetauscht werden. Beispielsweise kann der Haltepunkt 5 als Ladestation oder Tankstelle oder Servicestation ausgebildet sein. Die Führungsfahrzeuge 4 können an dem Haltepunkt 5 mit Hilfe einer Energiequelle 6 mit Energie versorgt werden. Beispielsweise kann mit Hilfe der Energiequelle 6, welche beispielsweise Windräder oder Solarzellen sind, erneuerbare Energie zum Laden des Führungsfahrzeugs 4 bereitgestellt werden. Somit kann den Fahrzeugen 2 des Fahrzeugverbands 1, welche insbesondere elektrische Fahrzeuge sind, während der Fortbewegungsfahrt über eine induktive oder konduktive Schnittstelle elektrische Energie zur Verfügung gestellt werden. Somit ergibt sich eine deutlich erhöhte Reichweite des Fahrzeugverbands 1.

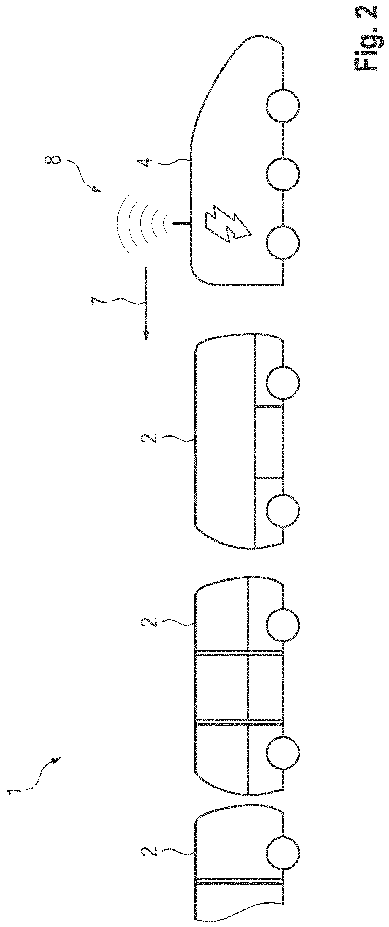

Die Fig. 2 zeigt einen Ausschnitt des Fahrzeugverbands 1. Dabei führt das Führungsfahrzeug 4 den Fahrzeugverband 1 an und ist entweder mechanisch fest mit den Fahrzeugen 2 gekoppelt oder drahtlos mit den mehreren Fahrzeugen 2 gekoppelt.

Beispielsweise kann das Führungsfahrzeug 4 ein Steuersignal 7 generieren und über ein Funknetzwerk 8 den mehreren Fahrzeugen 2 des Fahrzeugverbands 1 zur Verfügung stellen. Dabei kann mit Hilfe einer Steuereinheit das Steuersignal 7 generiert und mit Hilfe des Funknetzwerks 8 an die mehreren Fahrzeuge 2 übermittelt werden. Mit Hilfe des Steuersignals 7 können die mehreren Fahrzeuge 2 des Fahrzeugverbands 1 gesteuert werden. Insbesondere werden die mehreren Fahrzeuge 2 derart gesteuert, dass sie der Bewegung des Führungsfahrzeugs 4 entlang der Fortbewegungsfahrt dynamisch angepasst werden. Somit folgen die mehreren Fahrzeuge 2 synchron der Bewegung des Führungsfahrzeugs 4.

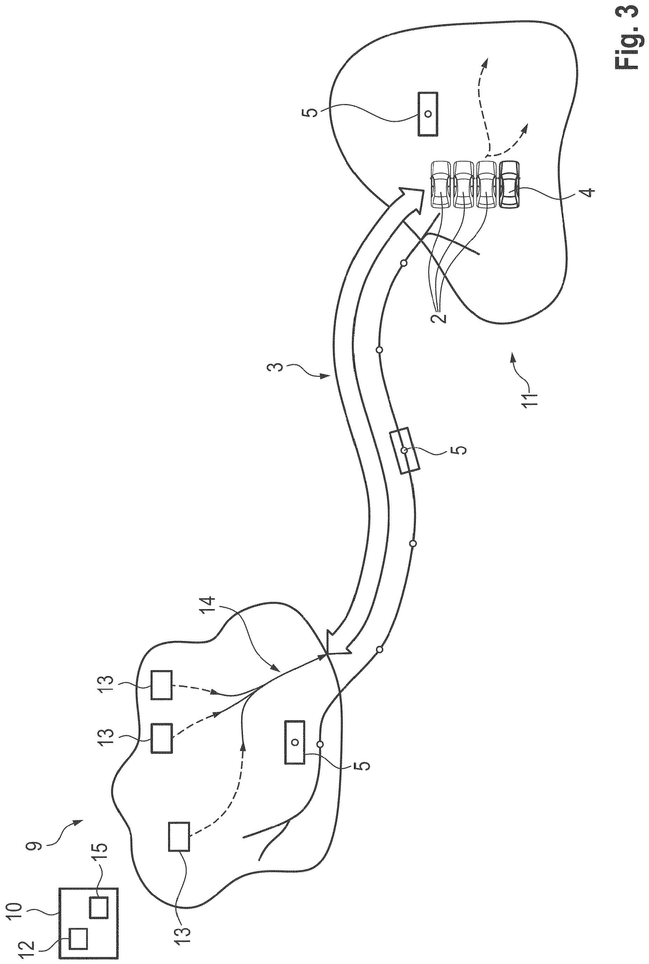

Die Fig. 3 zeigt ein Ausführungsbeispiel für die Zusammenstellung des Fahrzeugverbands 1 aus mehreren Fahrzeugen 2. Dabei wird der Fahrzeugverband 1 an einem Startpunkt 9 für die Durchführung der Fortbewegungsfahrt des Fahrzeugverbands 1 zusammengestellt. Beispielsweise handelt es sich bei dem Startpunkt 9 um einen Parkplatz oder um eine Stadt. Insbesondere erfolgt ein Zusammenstellen des Fahrzeugverbands 1 mit einem elektronischen Verwaltungssystem 10. Bei dem elektronischen Verwaltungssystem 10 handelt es sich insbesondere um ein Backend oder um ein Kommissionierungssystem oder um eine Steuerungsplattform oder eine Webanwendung oder um eine zentrale Recheneinheit. Insbesondere erfolgt die Zusammenstellung beziehungsweise die Bildung beziehungsweise Planung des Fahrzeugverbands 1 vor der tatsächlichen realen Zusammenstellung und insbesondere vor der durchzuführenden Fortbewegungsfahrt. Insbesondere wird in Abhängigkeit von einer Route 3 und/oder einem Zielort 11 oder einem Ziel-Zeitpunkt eine Zusammenstellungsinformation für das Zusammenstellen des Fahrzeugverbands 1 mit einer Auswerteeinheit 12 des elektronischen Verwaltungssystem 10 erzeugt. Mit dieser Zusammenstellungsinformation kann ein elektronisches Anforderungsprofil für die Fahrzeuge 2 des Fahrzeugverbands 1 durch die Auswerteeinheit 12 generiert werden. Dabei kann mit Hilfe des elektronischen Anforderungsprofils eine Kommissionierung des Fahrzeugverbands 1 unter Berücksichtigung einer resultierenden Sicherheit des gesamten Fahrzeugverbands 1 und/oder von weiteren Kriterien erfolgen. Insbesondere soll der Fahrzeugverband 1 ressourceneinsparend betrieben werden. Insbesondere werden mit Hilfe des elektronischen Anforderungsprofils die Fahrzeuge 2 in Abhängigkeit ihres Antriebssystems oder des Verwendungszweckes oder des Fahrzeugtyps oder ihrer Größe oder ihrer Sensorik oder ihres Innenraumkonzepts gesucht. In Abhängigkeit von dem generierten elektronischen Anforderungsprofil können potentielle Fahrzeuge, welche dem elektronischen Anforderungsprofil entsprechen, für das Zusammenstellen des Fahrzeugverbands 1 durch das elektronische Verwaltungssystem 10 ausgewählt werden. Sozusagen können mit Hilfe des elektronischen Verwaltungssystems genau die zum Fahrzeugverband 1 passenden Fahrzeuge 2 ausgewählt beziehungsweise bestimmt werden. Somit kann ein möglichst effizienter und effektiver Fahrzeugverband 1 zusammengestellt werden.

Die für das Zusammenstellen des Fahrzeugverbands 1 ausgewählten Fahrzeuge 13 können automatisch zu dem Startpunkt 9 bewegt werden. Dabei können die ausgewählten Fahrzeuge 13 manuell oder autonom zu dem Startpunkt 9 geordert und befördert werden. Die ausgewählten Fahrzeuge 13 werden an dem Startpunkt 9 hintereinander zu dem Fahrzeugverband 1 angeordnet beziehungsweise sortiert. Somit kann nach einer erfolgreichen hintereinander Sortierung der ausgewählten Fahrzeuge 13 die Fortbewegungsfahrt durch den Fahrzeugverband 1 gemeinsam durchgeführt werden.

Insbesondere können mit dem elektronischen Verwaltungssystem 10 ein die Auswahl betreffendes Hinweissignal generiert und an die ausgewählten Fahrzeuge 13 übermittelt werden. In Abhängigkeit von dem übermittelten Hinweissignal können die ausgewählten Fahrzeuge 13 oder Nutzer beziehungsweise Fahrzeuglenker der ausgewählten Fahrzeuge 13 eine Teilnahme an dem Fahrzeugverband 1 bestätigen oder ablehnen. Insbesondere kann die Übermittlung des Hinweissignals mit Hilfe einer Kommunikationseinheit über ein Funknetzwerk erfolgen. Mit Hilfe des Hinweissignals werden die ausgewählten Fahrzeuge 13 über die mögliche Teilnahme an dem Fahrzeugverband 1 und über bestimmte Anforderungen und/oder Kriterien und/oder Zeitpunkte informiert.

Je nachdem wie sich die ausgewählten Fahrzeuge 13 oder dessen Nutzer entscheiden, kann eine Information über die Bestätigung oder die Ablehnung an das elektronische Verwaltungssystem 10 wieder zurückgesendet werden. Nach der Übermittlung der Information über die Ablehnung kann eine erneute Auswahl an potentiellen Fahrzeugen für die Zusammenschau des Fahrzeugverbands 1 durchgeführt werden. Somit kann eine erneute Suche an Fahrzeugen für den Fahrzeugverband 1 wiederholt durchgeführt werden.

Die ausgewählten Fahrzeuge 13 werden für die Zusammenstellung des Fahrzeugverbands 1 auf einem Streckenabschnitt 14 hintereinander positioniert, wobei den ausgewählten Fahrzeugen 13 über das Funknetzwerk die Soll-Position jedes ausgewählten Fahrzeugs 13 in dem Fahrzeugverband 1 übermittelt wird. Somit wissen die ausgewählten Fahrzeuge 13 bereits bei der Anfahrt zu dem Streckenabschnitt 14 über ihre jeweilige Soll-Position in dem Fahrzeugverband 1 bescheid. Somit kann eine schnellere Zusammenstellung beziehungsweise Bildung des Fahrzeugverbands 1 erfolgen.

Beispielsweise kann in Abhängigkeit von dem elektronischen Anforderungsprofil eine Suchanfrage für die potentiellen Fahrzeuge des Fahrzeugverbands 1 erzeugt und über ein Funknetzwerk ausgegeben werden. Somit können die für die Auswahl bereitgestellten Fahrzeuge frühzeitig schon spezifisch mit Hilfe der Suchanfrage im Vorfeld gesucht werden. Die ausgesendete Suchanfrage wird von zumindest einem potentiellen Fahrzeug empfangen und eine Information bezüglich einer Teilnahmeintention des zumindest einen potentiellen Fahrzeugs für eine Teilnahme an dem Fahrzeugverband 1 an das elektronische Verwaltungssystem 10 übermittelt. Dabei wird eine Übereinstimmung einer Eigenschaft des zumindest einen potentiellen Fahrzeugs mit dem elektronischen Anforderungsprofil überprüft beziehungsweise verglichen. Sollte eine positive beziehungsweise erfolgreiche Übereinstimmung der Eigenschaft des zumindest einen potentiellen Fahrzeugs mit dem elektronischen Anforderungsprofil bestätigt worden sein, so wird das zumindest eine potentielle Fahrzeug für das Zusammenstellen des Fahrzeugverbands 1 über das elektronische Verwaltungssystem 10 automatisch ausgewählt. Beispielsweise erfolgt das Auswählen mit einer Verarbeitungseinheit 15 des elektronischen Verwaltungssystems 10. Insbesondere können mit dem elektronischen Anforderungsprofil die potentiellen Fahrzeuge dahingehend überprüft werden, ob die potentiellen Fahrzeuge spezifische Fahrerassistenzsysteme und/oder Hardwarekomponenten und/oder Softwaresysteme aufweisen. Somit kann ein individuell angepasster Fahrzeugverband 1 zusammengestellt werden, wobei dabei der Fahrzeugverband 1 Fahrzeuge mit spezifischen Systemen umfasst. Somit kann der Fahrzeugverband 1 eine Reihe von unterschiedlichen und verschiedenen Systemen aufweisen. Somit kann der Fahrzeugverband 1 eine sichere und effiziente Fortbewegungsfahrt zum Zielort 11 durchführen. Dabei können beispielsweise sicherheitsrelevante Fahrerassistenzsysteme oder Sensorsysteme zur Überwachung des Umgebungsbereichs des Fahrzeugverband 1 oder um energiesparende Antriebssysteme berücksichtigt werden.

Beispielsweise kann bei der Erzeugung der Zusammenstellungsinformation der Zustand der Fahrbahn der Route 3 und/oder eine Unfallstatistik der Route 3 und/oder eine Verkehrsinformation der Route 3 und/oder eine Wetterinformation berücksichtigt werden. Somit können bei der Zusammenstellung des Fahrzeugverbands 1 mit Hilfe der Zusammenstellungsinformation die Fahrzeuge ausgewählt werden, welche effizient und sicher die bevorstehende Fortbewegungsfahrt des Fahrzeugverbands 1 durchführen können.

### Bezugszeichenliste

- 1: Fahrzeugverband
- 2: Fahrzeug
- 3: Route
- 4: Führungsfahrzeug
- 5: Haltepunkt
- 6: Energiequelle
- 7: Steuersignal
- 8: Funknetzwerk
- 9: Startpunkt
- 10: elektronisches Verwaltungssystem
- 11: Zielort
- 12: Auswerteeinheit
- 13: ausgewählte Fahrzeuge
- 14: Streckenabschnitt
- 15: Verarbeitungseinheit

## Patentansprüche

1. Verfahren zum Zusammenstellen eines Fahrzeugverbands (1) aus mehreren Fahrzeugen (2) für eine durchzuführende Fortbewegungsfahrt des Fahrzeugverbands (1), wobei
- die Zusammenstellung des Fahrzeugverbands (1) mit einem elektronischen Verwaltungssystem (10) durchgeführt wird,
**dadurch gekennzeichnet, dass**
- in Abhängigkeit von einer Route (3) und/oder einem Zielort (11) und/oder einem Ziel-Zeitpunkt eine Zusammenstellungsinformation für das Zusammenstellen des Fahrzeugverbands (1) mit einer Auswerteeinheit (12) des elektronischen Verwaltungssystems (10) erzeugt wird,
- mit der Zusammenstellungsinformation ein elektronisches Anforderungsprofil für die Fahrzeuge (2) des Fahrzeugverbands (1) durch die Auswerteeinheit (12) generiert wird,
- in Abhängigkeit von dem elektronischen Anforderungsprofil potentielle Fahrzeuge (13), welche dem elektronischen Anforderungsprofil entsprechen, für das Zusammenstellen des Fahrzeugverbands (1) durch das elektronische Verwaltungssystems (10) ausgewählt werden.

2. Verfahren nach Anspruch 1,
**dadurch gekennzeichnet, dass**
die für das Zusammenstellen des Fahrzeugverbands (1) ausgewählten Fahrzeuge (13) automatisch zu einem Startpunkt (9) bewegt werden, und wobei die ausgewählten Fahrzeuge (13) an dem Startpunkt (9) zu dem Fahrzeugverband (1) hintereinander angeordnet werden, sodass die Fortbewegungsfahrt durch den Fahrzeugverband (1) gemeinsam mit den mehreren Fahrzeugen (2) durchgeführt werden kann.

3. Verfahren nach Anspruch 1 oder 2,
**dadurch gekennzeichnet, dass**
mit dem elektronischen Verwaltungssystem (10) ein die Auswahl betreffendes Hinweissignal generiert und jeweils an die ausgewählten Fahrzeuge (13) übermittelt wird.

4. Verfahren nach Anspruch 3,
**dadurch gekennzeichnet, dass**
in Abhängigkeit von dem übermittelten Hinweissignal die ausgewählten Fahrzeuge (13) oder Nutzer der ausgewählten Fahrzeuge (13) eine Teilnahme an den Fahrzeugverband (1) bestätigten oder ablehnen, wobei eine Information über die Bestätigung oder die Ablehnung zumindest eines ausgewählten Fahrzeugs (13) an das elektronische Verwaltungssystem (1) übermittelt wird.

5. Verfahren nach Anspruch 4,
**dadurch gekennzeichnet, dass**
nach der Übermittelung der Information über die Ablehnung des zumindest einen ausgewählten Fahrzeugs (13) eine erneute Auswahl an potentiellen Fahrzeugen für die Zusammenstellung des Fahrzeugverbands (1) durchgeführt wird.

6. Verfahren nach einem der vorhergehenden Ansprüche,
**dadurch gekennzeichnet, dass**
die ausgewählten Fahrzeuge (13) für die Zusammenstellung des Fahrzeugverbands (1) auf einem Streckenabschnitts (14) hintereinander positioniert werden, wobei den ausgewählten Fahrzeugen (13) über ein Funknetzwerk die Soll-Position jedes ausgewählten Fahrzeugs (13) in dem Fahrzeugverband (1) übermittelt wird.

7. Verfahren nach einem der vorhergehenden Ansprüche,
**dadurch gekennzeichnet, dass**
in Abhängigkeit von dem elektronischen Anforderungsprofil eine Suchanfrage für die potentiellen Fahrzeuge erzeugt und über ein Funknetzwerk ausgesendet wird.

8. Verfahren nach Anspruch 7,
**dadurch gekennzeichnet, dass**
die ausgesendete Suchanfrage von zumindest einem potentiellen Fahrzeug empfangen und eine Information bezüglich einer Teilnahmeintention des zumindest einen potentiellen Fahrzeugs für eine Teilnahme an dem Fahrzeugverband (1) an das elektronische Verwaltungssystem (10) übermittelt wird, wobei eine Übereinstimmung einer Eigenschaft des zumindest einen potentiellen Fahrzeugs mit dem elektronischen Anforderungsprofils überprüft wird.

9. Verfahren nach Anspruch 8,
**dadurch gekennzeichnet, dass**
in Abhängigkeit von der Überprüfung der Übereinstimmung das zumindest eine potentielle Fahrzeug für das Zusammenstellen des Fahrzeugverbands (1) durch das elektronische Verwaltungssystem (10) ausgewählt wird.

10. Verfahren nach einem der vorhergehenden Ansprüche,
**dadurch gekennzeichnet, dass**
mit dem elektronischen Anforderungsprofil die potentiellen Fahrzeuge dahingehend überprüft werden, ob die potentiellen Fahrzeuge spezifische Fahrerassistenzsysteme und/oder Hardwarekomponenten und/oder Softwaresysteme und/oder Sensorsystems aufweisen.

11. Verfahren nach einem der vorhergehenden Ansprüche,
**dadurch gekennzeichnet, dass**
der zusammengestellte Fahrzeugverband (1) während der durchgeführten Fortbewegungsfahrt entlang der Route (3) von einem Führungsfahrzeug (4) der mehreren Fahrzeuge (2) angeführt wird.

12. Verfahren nach Anspruch 11,
**dadurch gekennzeichnet, dass**
mit dem Führungsfahrzeug (4) ein Steuersignal (7) generiert wird, und wobei in Abhängigkeit von dem Steuersignals (7) die weiteren Fahrzeuge (2) des Fahrzeugverbands (1) gesteuert werden.

13. Verfahren nach einem der vorhergehenden Ansprüche,
**dadurch gekennzeichnet, dass**
bei der Erzeugung der Zusammenstellungsinformation ein Zustand der Fahrbahn der Route (3) und/oder eine Unfallstatistik der Route (3) und/oder eine Verkehrsinformation der Route (3) und/oder eine Wetterinformation berücksichtigt wird.

14. Computerprogrammprodukt, umfassend Befehle, die bei der Ausführung der Befehle durch einen Computer diesen veranlassen, ein Verfahren nach einem der Ansprüche 1 bis 13 auszuführen.

15. Elektronisches Verwaltungssystem (10) zum Zusammenstellen eines Fahrzeugverbands (1) aus mehreren Fahrzeugen (2), mit
- einer Auswerteeinheit (12) zum Erzeugen einer Zusammenstellungsinformation für das Zusammenstellen des Fahrzeugverbands (1) in Abhängigkeit von der vorgegebenen Route (3) und/oder einem vorgegebenen Zielort (11) und/oder einem vorgegebenen Ziel-Zeitpunkt,
- der Auswerteeinheit (12) zum Generieren eines elektronischen Anforderungsprofils für die Fahrzeuge (2) des Fahrzeugverbands (1) in Abhängigkeit von der Zusammenstellungsinformation, und
- einer Verarbeitungseinheit (15) zum Auswählen von potentiellen Fahrzeugen für die vorgegebene Route (3) in Abhängigkeit von dem elektronischen Anforderungsprofil für das Zusammenstellen des Fahrzeugverbands (1).
